# EUROPEAN PATENT APPLICATION

(11) **EP 1 486 867 A1**
(43) Date of publication of application: **15.12.2004**
(21) Application number: 03013183.3
(22) Date of filing: 12.06.2003
(51) Int. Cl.: G06F 9/445, G06F 9/44

(54) **Adapting software service to environment of computer**

(71) Applicant: SAP Aktiengesellschaft, 69190 Walldorf (DE)
(72) Inventor: Staude, Elke, 69181 Leimen (DE); Becker, Wolfgang, 67069 Ludwigshafen (DE); Scheibll, Daniel, 76137 Karlsruhe (DE)
(74) Representative: Walter, Philipe

(57) **Abstract**

Adapting a software service (A) to the environment (301) of a computer (901), wherein the computer is assigned to the service, adapting with analyzing (410) hardware and software environment (301) of the computer (901); modifying (420) the environment (301) by setting up a configuration file (211); and starting (430) to execute the service (A) by reading the configuration file (211). Control has a wrapper (200) on a control computer (904), wherein adapting is performed for a plurality of computers.

## Description

### Field of the Invention

The present invention generally relates to data processing and, more particularly, relates to computer systems, computer programs, and methods using executable instruction files.

### Background of the Invention

Computer centers are, for example, server farms, Internet providers, data centers of organizations, or telecommunication providers.

The computer centers frequently use computer landscapes with multiple computers that execute a plurality of software applications. The landscapes are often heterogeneous: generally, the computers differ in hardware (HW) and operating systems (OS), more specific, the computers have different processor families (e.g., PowerPC and

Pentium families) or OS versions in the same OS family.

HW and OS in combination form the environment for the application. Before operating, any application has to be adapted to a particular environment.

Especially in case where similar services are distributed across the landscape, adapting the services according to the environment is time and cost consuming.

There is a need to provide computer systems, programs and methods for installing and configuring services that alleviate these and other technical problems.

### Summary of the Invention

According to a method for adapting a software service to the environment of a computer (service is assigned to computer), a technical solution is provided by performing the following steps: analyzing the environment of the computer; modifying the environment by setting up a configuration file; and starting to execute the service by reading the configuration file.

In an advantageous implementation, the steps are controlled by a wrapper. Preferably, the wrapper is a script. Preferably, the wrapper is operated by a control computer.

In the advantageous implementation, analyzing the environment of the computer comprises to analyze hardware and software of the computer.

In the advantageous implementation, the steps analyzing and modifying are performed for a plurality of computers, modifying is performed by using a configuration template that is distributed to the computers in the plurality and then changed according to the results of analyzing. The wrapper could be of a framework to adapt the environment to a particular service. The framework would use individual wrappers for each service.

The invention has also the aspect of a computer program with instructions for causing a computer to perform the method as described. The computer program is embodied on a record medium. Also, a computer program has program instructions for adapting a software service to the computer environment, the program instructions cause the computer to analyze the environment of the computer; to modify the environment by setting up a configuration file; and to start executing the service by reading the configuration file.

The invention has also the aspect of a computer that adapts a software service to its environment. Instructions cause the computer to analyze the environment of the computer; to modify the environment by setting up a configuration file; and to start to execute the service by reading the configuration file.

The invention has also the aspect of a method for setting up a business application having a plurality of services that are assigned for execution by a plurality of computers, the method with analyzing the environments of the computers; modifying the environments by setting up configuration files; and starting to execute the services by reading the configuration files.

### Brief Description of the Drawings

- FIG. 1: illustrates an exemplary implementation of the invention by a simplified block diagram of a computer system;
- FIG. 2: illustrates a flow chart of a method of the present invention;
- FIG. 3: illustrates an exemplary scenario for performing the method in relation to one computer;
- FIG. 4: illustrates an exemplary scenario for performing the method in relation to an exemplary plurality of computers; and
- FIG. 5: illustrates a simplified block diagram of a computer system in that the present invention may be operated.

### Detailed Description

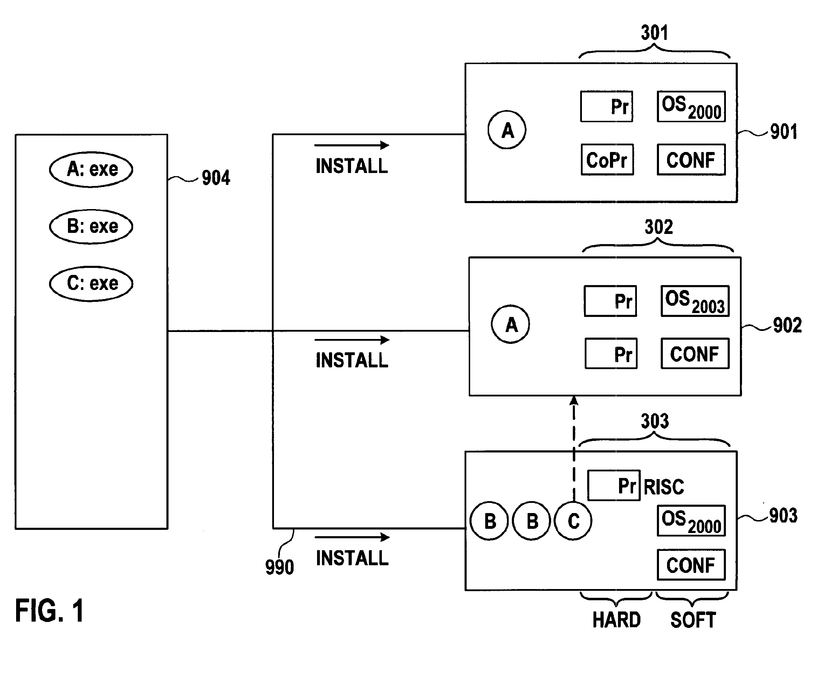

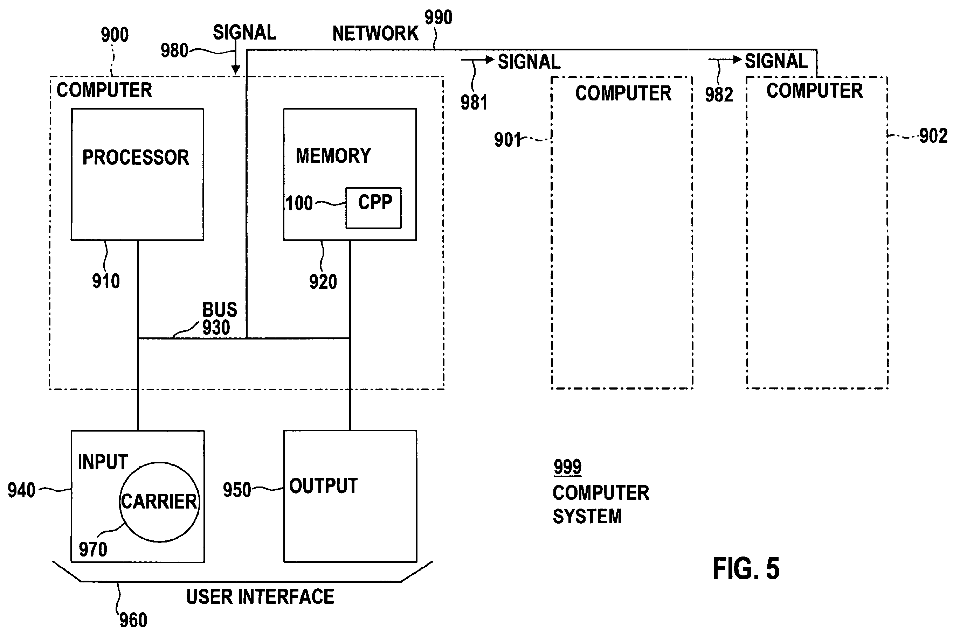

FIG. 1 illustrates an exemplary implementation of the invention by a simplified block diagram of a computer system in that computers 901-904 communicate via network 990. A general description of such a system appears at the end of the specification (cf. FIG. 5).

Each software application usually has a plurality of services. A service is, for example, a database node, an application component, a J2EE engine, an Internet portal etc. Description and drawings identify particular services by uppercase letters, such as A, B, and C. The exemplary software application uses services AABBC.

Within an application and across applications, a first service (e.g., A) may have the function of a client to a second service (e.g., B); or the first service may have the function of a server to the second service.

Particular services (e.g., A, B, or C) are assigned to particular computers (e.g., computer 901, 902 or 903) or vice versa. For example, service A could be assigned to computers 901 and 902; service B could be assigned for execution in two instances on computer 903; and service C could be assigned to computer 903. The figure conveniently uses rectangles with sharp corners for the computers, and circles for the services.

A service is assigned in parallel, for example, in the following cases:
- The service is assigned to two or more computers, such as service A on computers 901 and 902.
- The service is assigned to a single computer two or more times, such as service B for execution in 2 instances on 903.

Assignments can be distinguished into static and dynamic assignments. In case of static assignment, executing particular services is limited to particular computers, as in the figure. In case of dynamic assignment, executing particular services may be shifted from computer to computers, for example, service C could be moved from 903 to 902 (dashed arrow).

The services are available in files with instructions that are ready to be executed by the computer's processors. Such files are also referred to as "binary files". Often, such files have file names with extensions like "exe" or the like. In the above example, the file for service A could be A.exe; the file for service B could be B.exe; the file for service C could be C.exe.

In the process "Installing" (cf. the arrows INSTALL), the files are written into memory so that the processors of computers 901-903 have access to the files. The memory can be temporary memory (e.g., RAM) or permanent memory (e.g., ROM, disk drive) or any combination thereof (details, cf. FIG. 5). Memory and processor communicate according to their physical location, for example, via bus or via computer network.

In an alternative, the files remain at their original location (e.g., computer 904) and computers 901-903 obtain access according to the assignment.

The service environment is the state of the computer that is assigned to the service. The environment is determined by the combination of the hardware and software of that computer. Each computer 901-903 has its particular environment 301-303. For convenience, the environment of computer 904 is not discussed here.

Hardware determines the environment, for example, in terms of
- classification of the processor ("Pr") according to the family (e.g., Pentium, PowerPC);
- classification of the processor according to the instruction set (e.g., reduced instruction set computer RISC, complex instruction set computer CISC), for example, RISC in 903;
- availability (i.e. presence, absence) of a processor specialized in numerical calculations (e.g., "CoPr" in computer 901);
- the amount of memory (i.e. in Bytes) allocated to the processor, hard disk memory and RAM memory;
- the number of processors (e.g., 1 Pr and 1 CoPr 901, 1 Pr in 903, 2 Pr in 902).

Software determines the environment, for example, in terms of
- classification of the operating system according to a type (e.g., UNIX, Windows);
- classification of the operating system (OS) according to a version (e.g., version of the year 2000 in 901 and 903, "OS2000"; version of the year 2003 in 902);
- program path (e.g., the directory "program files" for storing the executables;
- content of configuration files (e.g., "CONF"), log files, registry files or the like;
- the availability of different libraries and drivers.

Configuring stands for adapting the installed service to the particulars of the environment. Often, configuring comprises to change software, for example, by adding or removing files. This is especially challenging in case of dynamic assignments: moving services is often accompanied by moving environments.

Executing stands for performing the functions of the service by the computer.
- In case of direct execution, the instructions go to the processor without being modified. The instructions are adapted to the processor. The figure uses direct execution as example (i.e. service A by 901, 902, B by 903 in parallel and C by 903).
- In case of indirect execution, the instruction are interpreted or compiled. For example, instructions in Java are interpreted by a Java Virtual Machine. Also, instructions in ABAP/4 for business applications are interpreted in enterprise software SAP R/3 that is commercially available from SAP Aktiengesellschaft, Walldorf (Germany).

The order of installing, configuring and executing has disadvantages: Installing and configuring limits flexibility and causes costs, especially in distributed landscapes of multiple services and multiple computers. Traditionally, the services are developed under consideration of environments that are available during development. During the lifetime of the service (e.g. over years) or if a service is moved (cf. dynamic assignment), the environments change and re-configuration is required. For example, environments 301 and 302 of computers 901 and 902, respectively, are different in terms of processors and operating systems. In case of events like updating the OS, the environment would change as well.

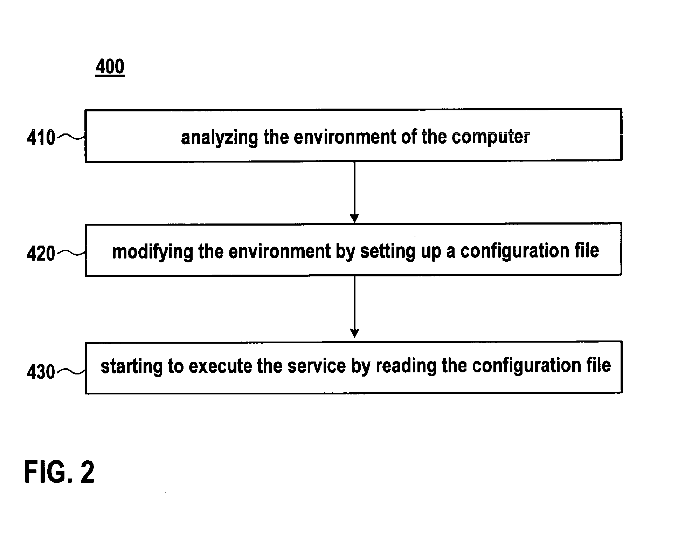

FIG. 2 illustrates a flow chart diagram of method 400 for adapting a software service to the environment of a computer, wherein the service is assigned to the computer. Method 400 comprises the following steps: Step analyzing 410 the environment of the computer; step modifying 420 the environment by modifying a configuration file; and step starting 430 to execute the service by reading the configuration file.

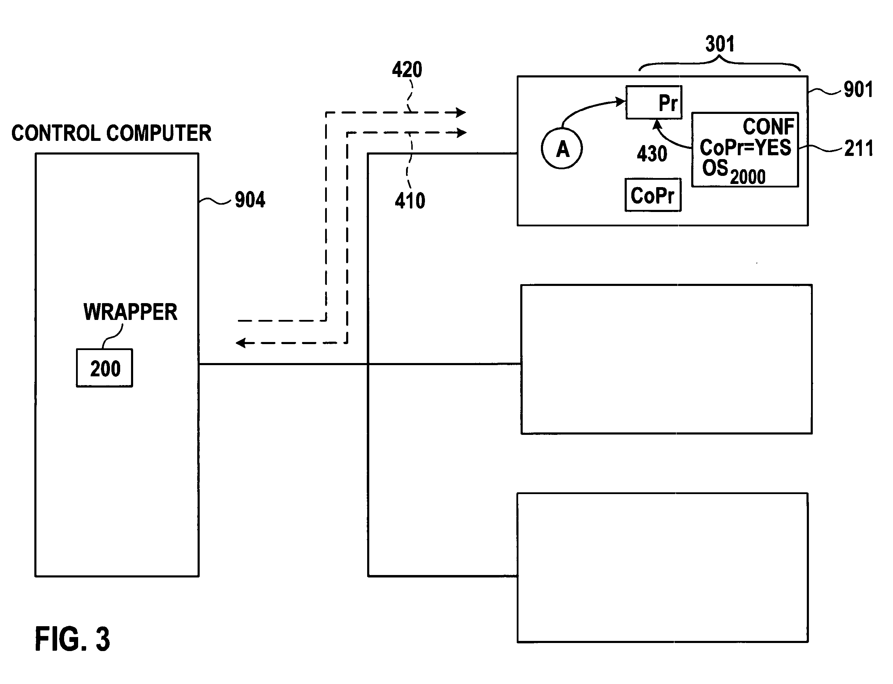

FIG. 3 illustrates an exemplary scenario for performing the method in relation to one computer 901. In the example, service A is assigned to computer 901. The steps are controlled by wrapper 200 that is conveniently operated by computer 904 (acting as control computer). In the exemplary implementation, wrapper 200 is a script.

The method (400) for adapting service A to environment 301 of computer 901 comprises analyzing 410 environment 301 of computer 901, modifying 420 environment 301 by setting up configuration file 211; and starting 430 to execute service A by reading configuration file 211.

More in detail, in step analyzing 410 (environment 301 of 901), wrapper 200 sends computer instructions to computer 901 that analyze the hardware (of computer 901). In the exemplary implementation, the analysis indicates the result "Co-processor present". Also, in step analyzing 410, wrapper 200 sends computer instructions to computer 901 that analyze the software, in the example, with the result "OS in the version of the year 2000". Both results are returned to wrapper 200.

In step modifying, wrapper 200 sends configuration file 211 to computer 901 with the exemplary content "CoPr=YES, OS2000" corresponding to the analysis results.

In step starting 430 to execute, wrapper instructs the processor of computer 901 to reading configuration file 211 and to start service A. Service A starts therefore on the main processor and on the coprocessor.

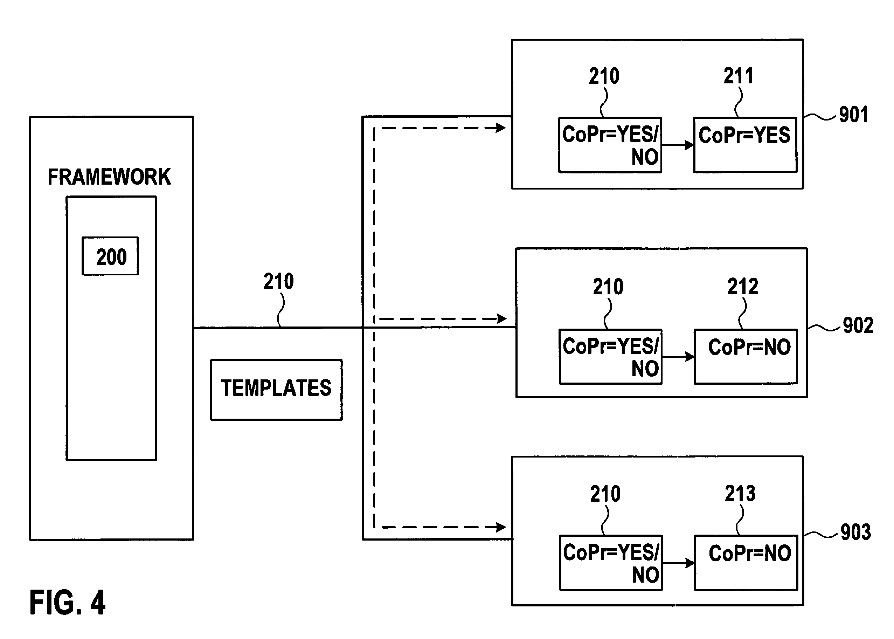

FIG. 4 illustrates an exemplary scenario for performing the method in relation to an exemplary plurality of computers 901, 902 and 903. Steps analyzing 410 and modifying 420 are performed for this plurality of computers. Modifying 420 is performed by using configuration template 210 that is distributed to the computers and then changed according to the analysis results.

Conveniently, wrapper 200 is part of a framework to adapt the environments for a particular service. The framework may use individual wrappers for each service or for each computer. The framework may also consider the service/computer assignments (static or dynamic).

In the exemplary implementation, template 210 has originally the content "CoPr=YES/NO". In step modifying, template 210 is turned into configuration file 211 on computer 901 ("CoPr=YES"), into configuration file 212 on computer 902 ("CoPr=NO") and into configuration file 213 on computer 903 ("CoPr=NO").

As explained in connection with FIG. 3, the environments could also be analyzed for software. The framework could generate more complex configuration files, for example, taking account hardware and software in combination and write the suitable execution parameter into the configuration files. For example, configuration file 212 (for computer 902) could include instructions to use both processors in 902; configuration file 213 (for computer 903) could include instructions to limit execution of each service B to a predetermined processor usage (e.g., 40% usage for each B, 20% usage for C).

The use of the present invention is advantageous, for example, in the following aspects: From the viewpoint of system operators, configuring is automated. It appears that executing follows installing directly. Adding new services to existing applications with installing, automatically configuring and executing can be done at any time. The application is scalable: there could be tens of services distributed to tens of computers. Adding new services is especially convenient for computers in blade technology (processor/memory located on a single circuit board; the boards in racks). The service (e.g., A) can be executed on different computers in different environments (e.g., 901/301 and 902/302), but the executable file (e.g., A.exe) remains unchanged.

FIG. 5 illustrates a simplified block diagram of exemplary computer system 999 having a plurality of computers 900, 901, 902 (or even more). Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a microcontroller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program

### Reference numbers

- 100: computer program
- 200: wrapper
- 210: template
- 211, 212, 213: configuration files
- 301, 302, 303: environments
- 400: method
- 410,420,430: method steps
- 900: computer in general
- 901, 902, 903: computer that execute service
- 904: control computer
- 910: processor
- 920: memory
- 930: bus
- 940: input device
- 950: output device
- 960: user interface
- 970: program carrier
- 980: program signal
- 990: network
- 999: computer network system
- A, B, C: services

## Claims

1. Method (400) for adapting a software service (A) to the environment (301) of a computer (901), wherein the service is assigned to the computer (901), the method comprising the following steps:
analyzing (410) the environment (301) of the computer (901);
modifying (420) the environment (301) by setting up a configuration file (211); and
starting (430) to execute the service (A) by reading the configuration file (211 ).

2. Method of claim 1, wherein the steps are controlled by a wrapper (200).

3. Method of claim 2, wherein the wrapper (200) is a script.

4. Method of claim 3, wherein the wrapper (200) is operated by a control computer (904).

5. Method of claim 1, wherein analyzing (410) the environment (301) of the computer (901) comprises to analyze hardware of the computer (901).

6. Method of claim 1, wherein analyzing (410) the environment (301) of the computer (901) comprises to analyze software of the computer (901).

7. Method of claim 1, wherein steps analyzing (410) and modifying (420) are performed for a plurality of computers (901, 902, 903), wherein modifying is performed by using a configuration template (210) that is distributed to the computers in the plurality (901, 902, 903) and then changed according to the results of analyzing.

8. Method of claim 2, wherein steps analyzing (410) and modifying (420) are performed for a plurality of computers, and wherein the wrapper (200) is part of a framework to adapt the environment to a particular service.

9. Method of claim 8, wherein the framework uses individual wrappers for each service.

10. Computer program (100/200) comprising program instructions for causing a computer to perform the method of any of claim 1-9.

11. Computer program (100/200) according to claim 10, embodied on a record medium (970).

12. Computer program (100/200) with program instructions for adapting a software service (A) to the computer environment (301), the computer program **characterized in that** the program instructions cause the computer (901) to analyze (410) the environment (301) of the computer (901); to modify (420) the environment (301) by setting up a configuration file (211); and to start (430) executing the service (A) by reading the configuration file (211 ).

13. Computer (901) that adapts a software service (A) to the environment (301) of the computer (901), **characterized by** instructions causing the computer to analyze (410) the environment (301) of the computer (901); to modify (420) the environment (301) by setting up a configuration file (211); and to start (430) to execute the service (A) by reading the configuration file (211 ).

14. Method (400) for setting up a business application having a plurality of services that are assigned for execution by a plurality of computers (901/902/903), the method comprising the following steps: analyzing (410) the environments (301/302/303) of the computers (901/902/903); modifying (420) the environments (301/302/303) by setting up configuration files (211/212/213; and starting (430) to execute the services (A, B, C) by reading the configuration files (211/212/213).
